# EUROPÄISCHE PATENTSCHRIFT

(11) **EP 2 054 263 B1**
(45) Veröffentlichungstag und Bekanntmachung des Hinweises auf die Patenterteilung: **20.04.2011**
(21) Anmeldenummer: 07801530.2
(22) Anmeldetag: 07.08.2007
(51) Int. Cl.: B60N 2/225

(54) **ÜBERTRAGUNGSVORRICHTUNG FÜR EINEN FAHRZEUGSITZ**
TRANSMISSION DEVICE FOR A VEHICLE SEAT
DISPOSITIF DE TRANSMISSION POUR UN SIÈGE DE VÉHICULE

(30) Priorität: 07.09.2006 DE 102006041917
(43) Veröffentlichungstag der Anmeldung: 06.05.2009
(73) Patentinhaber: KEIPER GmbH & Co. KG, 67657 Kaiserslautern (DE)
(72) Erfinder: LEHMANN, Ulrich, 53347 Alfter (DE)
(74) Vertreter: Patentanwälte Hosenthien-Held und Dr. Held
(86) Internationale Anmeldenummer: PCT/EP2007/006954
(87) Internationale Veröffentlichungsnummer: WO 2008/028549

(56) Entgegenhaltungen:
- DE-C1- 4 340 696
- US-A- 5 398 904

## Beschreibung

Die Erfindung betrifft eine Übertragungsvorrichtung für einen Fahrzeugsitz, insbesondere einen Kraftfahrzeugsitz, mit den Merkmalen des Oberbegriffs des Anspruches 1.

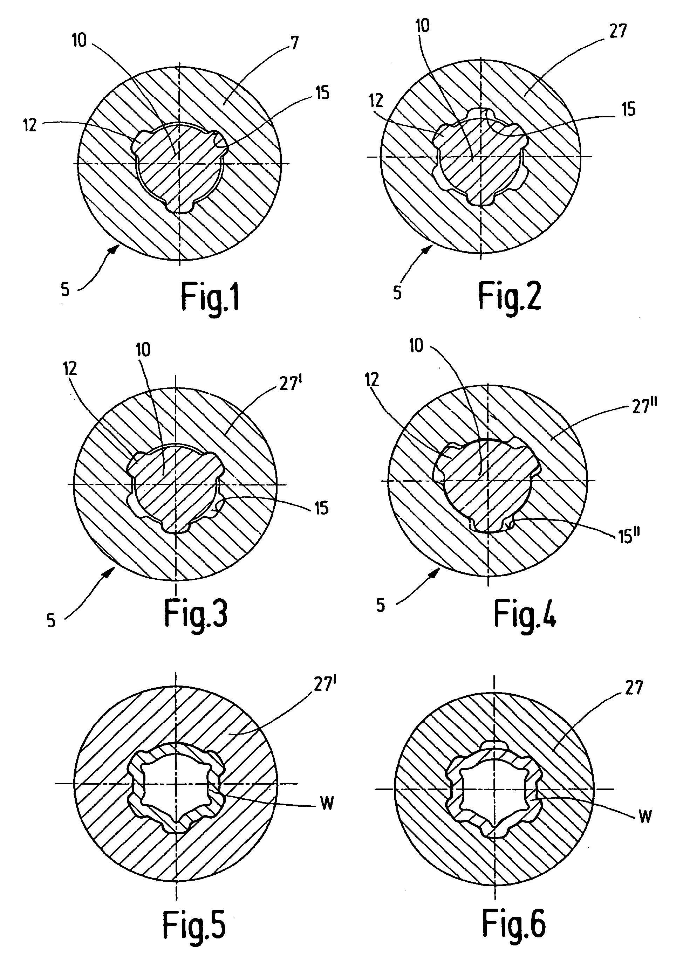

Aus der DE 43 40 696 C1 ist für einen Fahrzeugsitz eine Übertragungsvorrichtung dieser Art bekannt, welche anhand der nachfolgenden Fig. 5 und 6 näher erläutert ist. Der Welle W der bekannten Übertragungsvorrichtung fehlt an einer Stelle gegenüber einer sechszähligen Symmetrie ein Zahn, so dass insgesamt m=5 Zähne vorhanden sind. Eine an einem Mitnehmer eines Getriebebeschlags vorgesehene Nabe 27' weist das entsprechende Gegenprofil auf, also n=5 Aufnahmen. Damit wird eine Verdrehsicherheit geschaffen, gemäß welcher sich die bekannte Welle W nur in einer Orientierung modulo 360° in die Nabe 27' einstecken lässt, d.h. die Verdrehsicherheit beträgt 360°. Nachdem eine volle Umdrehung des Mitnehmers, also der Nabe 27', eine Verdrehung der beiden Beschlagteile des Getriebebeschlags um einen Zahn, also um wenige Winkelgrade, bewirkt, was mit bloßem Auge noch erkannt werden kann, ist diese Verdrehsicherheit von 360° für diesen Anwendungsfall ausreichend. Eine an einem Handrad vorgesehene Nabe 27 weist die unveränderte sechszählige Symmetrie auf, also n=6 Aufnahmen, da die genaue Orientierung zwischen bekannter Welle W und Handrad ohne Bedeutung ist. Das Handrad lässt sich so in sechs verschiedenen Orientierung auf die bekannte Welle W stecken, d.h. die Verdrehsicherheit beträgt für diesen Anwendungsfall 360°/n = 60°, könnte aber noch kleiner sein.

Der Erfindung liegt die Aufgabe zu Grunde, eine Übertragungsvorrichtung der eingangs genannten Art zu verbessern, insbesondere hinsichtlich der Kosten. Diese Aufgabe wird erfindungsgemäß durch eine Übertragungsvorrichtung mit den Merkmalen des Anspruches 1 gelöst. Vorteilhafte Ausgestaltungen sind Gegenstand der Unteransprüche.

Außer den beiden eingangs genannten Anwendungsfällen, die sehr unterschiedliche Anforderungen an die Verdrehsicherheit, also an die relative Orientierung von Welle und Nabe, zeigen, ist für einen Rastbeschlag ein weiterer Anwendungsfall denkbar, bei dem eine Verdrehsicherheit von 360°/n = 120° ausreichen würde, die durch eine symmetrische Anordnung von m=3 Zähnen der Welle und n=3 Aufnahmen der Nabe erreicht wird. Da das Drehmoment auf den Mitnehmer eines Rastbeschlags nur zum Entriegeln dient, reichen drei Zähne auch unter diesem Aspekt aus.

Dadurch, dass die Nabe n=2m Aufnahmen oder n=2m-1 Aufnahmen aufweist, steht in der Art eines Baukastens ein System kompatibler Wellen und Naben zur Verfügung, mit dem je nach Anwendungsfall Wellen und Naben kombiniert werden können. So kann die Nabe Bestandteil eines Handrades oder Hebels oder eines Mitnehmers zum Antreiben oder Entriegeln eines Beschlags sein, mittels dessen Sitzkomponenten des Fahrzeugsitzes relativ zueinander bewegt werden, insbesondere die Neigung einer Lehne eingestellt wird. Dabei ist vorzugsweise auf beiden Fahrzeugsitzseiten je ein Beschlag vorgesehen, wobei die beiden Beschläge durch die Welle miteinander in Verbindung stehen, letztendlich also drei Naben in der erfindungsgemäßen Übertragungsvorrichtung Verwendung finden können.

Die Welle kann mit einer geringeren Anzahl von Zähnen gefertigt werden (m < n) bei gleichzeitiger Weiterverwendung vorhandener Werkzeuge für die Nabe. Beide Aspekte reduzieren die Herstellungskosten. Es können die allgemein bekannten Naben mit n=m Aufnahmen in das System einbezogen werden, auch solche mit breiteren Aufnahmen für einen Toleranzausgleich.

Im folgenden ist die Erfindung anhand eines in der Zeichnung dargestellten Ausführungsbeispiels näher erläutert. Es zeigen
- Fig. 1: einen Schnitt durch das Ausführungsbeispiel im Bereich der ersten Nabe,
- Fig. 2: einen Schnitt durch das Ausführungsbeispiel im Bereich einer zweiten Nabe,
- Fig. 3: einen Schnitt durch das Ausführungsbeispiel im Bereich einer abge- wandelten zweiten Nabe,
- Fig. 4: einen Schnitt durch das Ausführungsbeispiel im Bereich einer weiteren abgewandelten Nabe,
- Fig. 5: einen Schnitt durch eine bekannte Übertragungsvorrichtung,
- Fig. 6: einen Schnitt durch eine weitere bekannte Übertragungsvorrichtung,

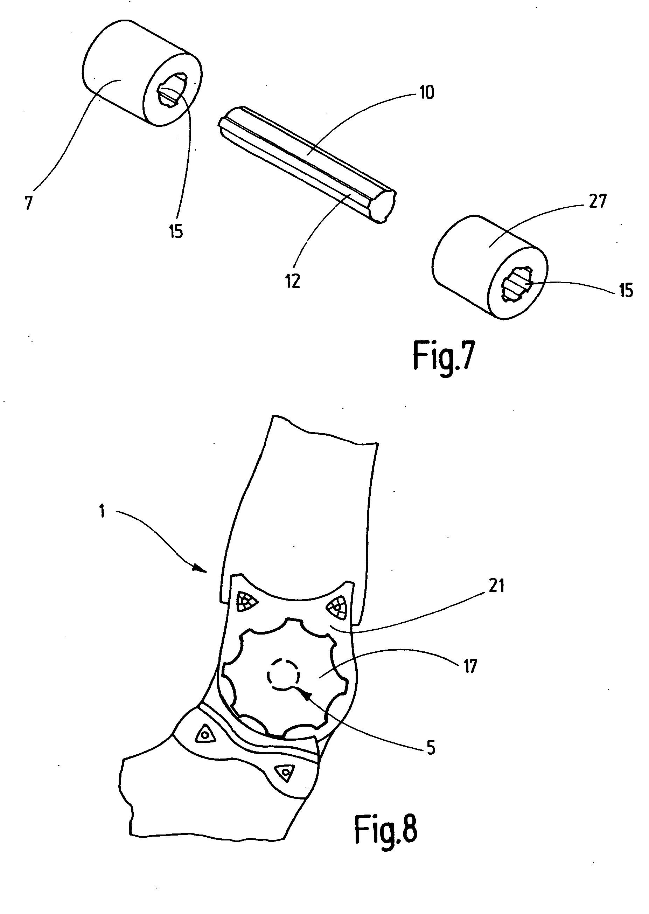

- Fig. 7: eine perspektivische Ansicht des Ausführungsbeispiels, und
- Fig. 8: eine Teilansicht eines Fahrzeugsitzes.

Ein Fahrzeugsitz 1 eines Kraftfahrzeuges weist wenigstens eine Übertragungsvorrichtung 5 auf, die wenigstens eine erste Nabe 7 und eine Welle 10 umfasst, welche beide drehbar gelagert sind. Die Übertragungsvorrichtung 5 dient der Übertragung eines Drehmomentes von der ersten Nabe 7 auf die Welle 10 oder von der Welle 10 auf die erste Nabe 7. Hierfür sind die zentrale Öffnung der ersten Nabe 7 und die Welle 10 in passender Weise profiliert.

Das Profil der Welle 10 weist m Zähne 12 auf, worunter auch andere radial nach außen abstehende Materialpartien verstanden sein sollen, beispielsweise Keile, Ecken oder sonstige konvex Formen. Die Anzahl m der Zähne 12 beträgt vorzugsweise drei, kann auch auch vier oder fünf, gegebenenfalls auch zwei oder eins betragen. Die m Zähne 12 sind untereinander gleich ausgebildet und gleichmäßig über den Umfang der Welle 10 verteilt. Das Profil der zentralen Öffnung der ersten Nabe 7 weist n Aufnahmen 15 auf, worunter auch andere radial Aussparungen im Material der ersten Nabe 7 verstanden sein sollen, beispielsweise Nuten oder sonstige konkave Formen. Die Anzahl n der Aufnahmen 15 ist wenigstens so groß wie die Anzahl m der Zähne 12, im einfachsten Fall, wie aus dem Stand der Technik bekannt, gleich groß. Wenn die Welle 10 in die erste Nabe 7 gesteckt ist, wirken diese formschlüssig zusammen und können das Drehmoment übertragen.

Vorliegend ist das Profil der Welle 10 ein Keilwellenprofil mit einer dreizähligen Symmetrie, d.h. von einem kreisförmigen Kernquerschnitt der Welle 10 stehen drei um jeweils 120° zueinander versetzte, angeformte Keile als Zähne 12 radial nach außen ab. Das Profil der zentralen Öffnung der ersten Nabe 7 weist entsprechend drei um jeweils 120° zueinander versetzte Nuten als Aufnahme 15 auf.

Die Übertragungsvorrichtung 5 kann im Fahrzeugsitz 1 so eingesetzt werden, dass beispielsweise die Welle 10 als Übertragungsstange dient und die erste Nabe 7 ein Bestandteil eines Handrades 17 oder Hebels oder eines Mitnehmers eines Beschlags 21 bildet, mit dessen der Beschlag 21 - im Falle eines Getriebebeschlags - angetrieben oder - im Falle eines Rastbeschlags - entriegelt wird. Beschläge 21, mit denen Sitzkomponenten des Fahrzeugsitzes 1 relativ zueinander bewegt werden, beispielsweise die Neigung einer Lehne eingestellt wird, sind in der Regel auf jeder der beiden Fahrzeugsitzseiten vorgesehen. Daher weist die Übertragungsvorrichtung 5 wenigstens eine zweite Nabe 27 auf, gegebenenfalls noch weitere zweite Naben 27, so dass insgesamt mehrere Naben durch die Welle 10 verbunden sind und mit dieser zusammenwirken. Die Welle 10 weist ihr Profil vorzugsweise über ihre gesamte Länge auf, oder nahezu über die gesamte Länge, beispielsweise im Falle von nachbearbeiteten Endabschnitten. Im einfachsten Fall ist die zweite Nabe 27 wie die erste Nabe 7 ausgebildet.

Es kann je nach Anwendungsfall aber auch sein, dass die zweite Nabe 27 ein anderes Profil mit einer größeren Anzahl n von Aufnahmen 15 aufweist, um mit Wellen höherer Anzahl m von Zähnen zur Übertragung größerer Drehmomente oder zur Weiterverwendung alter Werkzeuge kompatibel zu sein. So kann beispielsweise die doppelte Anzahl von Aufnahmen vorgesehen sein, also n=2m Aufnahmen 15, die dann wieder gleichmäßig über den Umfang verteilt sind. Somit kommt in jede zweite Aufnahme 15 ein Zahn 12 zu liegen. Bei drei Zähnen 12 sind sechs Aufnahmen 15 vorhanden. Bei zweiten Naben 27' mit Verdrehsicherung ist die Symmetrie gebrochen, und es fehlt an einer Stelle eine Aufnahme 15, so dass insgesamt n=2m-1 Aufnahmen 15 vorhanden sind. Bei drei Zähnen 12 sind fünf Aufnahme 15 vorhanden, wobei in dieser Konstellation eine reduzierte Verdrehsicherung erhalten bleibt, d.h. die Welle 10 kann nur in drei Orientierungen in die zweite Nabe 27' gesteckt werden. Es kann aber auch sein, dass zum Zwecke des Toleranzausgleichs zwischen den beiden Fahrzeugsitzseiten ein Spiel in der zweiten Nabe 27" vorhanden sein muss, vorzugsweise in Form eines Leerwegs, welcher vor dem formschlüssigen Zusammenwirken durchfahren wird. Hierfür weist die zweite Nabe 27" n=m Aufnahmen 15" mit einer größeren Breite, d.h. Abmessung in Umfangsrichtung, auf.

Insgesamt steht somit ein System zur Verfügung, bei dem Wellen 10 und Naben 7, 27, 27' und 27" mit unterschiedlicher Anzahl m von Zähnen 12 und n von Aufnahmen 15 und 15" untereinander kompatibel sind und je nach Anwendungsfall oder vorhandenen Werkzeugen kombiniert werden können. In einer Übertragungsvorrichtung 5 kann die gleiche Welle 10 mit wenigstens zwei Naben 7, 27, 27' und 27" zusammenwirken, die untereinander wenigstens zwei unterschiedliche Anzahlen von Aufnahmen 15 und/oder wenigstens zwei unterschiedliche Breiten von Aufnahmen 15, 15' aufweisen.

### Bezugszeichenliste

- 1: Fahrzeugsitz
- 5: Übertragungsvorrichtung
- 7: erste Nabe
- 10: Welle
- 12: Zahn
- 15, 15": Aufnahme
- 17: Handrad
- 21: Beschlag
- 27, 27', 27": zweite Nabe
- m: Anzahl der Zähne
- n: Anzahl der Aufnahmen
- W: Welle einer bekannten Übertragungsvorrichtung

## Patentansprüche

1. Übertragungsvorrichtung für einen Fahrzeugsitz, insbesondere Kraftfahrzeugsitz, mit wenigstens einer Nabe (7, 27, 27', 27") und einer Welle (10), welche zur Übertragung eines Drehmoments formschlüssig zusammenwirken, wobei die Welle (10) ein Profil mit m Zähnen (12) und die Nabe (7, 27, 27', 27") ein Profil mit einer zentralen Öffnung mit n Aufnahmen (15, 15") aufweist, und wobei jede Aufnahme (15, 15') zum Zusammenwirken mit einem Zahn (12) ausgebildet ist, **dadurch gekennzeichnet, dass** die Nabe (7, 27, 27', 27") n=2m Aufnahmen (15, 15") oder n=2m-1 Aufnahmen (15, 15") aufweist.

2. Übertragungsvorrichtung nach Anspruch 1, **dadurch gekennzeichnet, dass** wenigstens zwei Naben (7, 27, 27', 27") vorgesehen sind, welche untereinander wenigstens zwei unterschiedliche Anzahlen n von Aufnahmen (15, 15') und/oder wenigstens zwei unterschiedliche Breiten von Aufnahmen (15, 15') aufweisen.

3. Übertragungsvorrichtung nach Anspruch 2, **dadurch gekennzeichnet, dass** ein Teil dieser wenigstens zwei Naben (7, 27, 27', 27") n=m Aufnahmen (15, 15') aufweist.

4. Übertragungsvorrichtung nach einem der vorhergehenden Ansprüche, **dadurch gekennzeichnet, dass** die Nabe (7, 27, 27', 27") Bestandteil eines Handrades (17) oder eines Mitnehmers zum Antreiben oder Entriegeln eines Beschlags (21) ist.

5. Übertragungsvorrichtung nach Anspruch 4, **dadurch gekennzeichnet, dass** mittels des Beschlags (21) Sitzkomponenten des Fahrzeugsitzes (1) relativ zueinander bewegt werden, insbesondere die Neigung einer Lehne eingestellt wird.

6. Übertragungsvorrichtung nach Anspruch 4 oder 5, **dadurch gekennzeichnet, dass** auf beiden Fahrzeugsitzseiten je ein Beschlag (21) vorgesehen ist, wobei die beiden Beschläge (21) durch die Welle (10) miteinander in Verbindung stehen.

7. Übertragungsvorrichtung nach einem der vorhergehenden Ansprüche, **dadurch gekennzeichnet, dass** die Welle (10) ihr Profil über wenigstens nahezu die gesamte Länge aufweist.

8. Übertragungsvorrichtung nach einem der vorhergehenden Ansprüche, **dadurch gekennzeichnet, dass** die Welle (10) ein Keilwellenprofil mit Keilen als Zähnen (12) aufweist.

9. Übertragungsvorrichtung nach einem der vorhergehenden Ansprüche, **dadurch gekennzeichnet, dass** die Welle (10) drei Zähne (12) aufweist.

10. Fahrzeugsitz, insbesondere Kraftfahrzeugsitz, mit wenigstens einer Übertragungsvorrichtung (5) nach einem der vorhergehenden Ansprüche.

## Claims

1. A transmission device for a vehicle seat, in particular motor vehicle seat, with at least one hub (7, 27, 27', 27") and a shaft (10) which interact in a form-fitting manner in order to transmit a torque, wherein the shaft (10) has a profile with m teeth (12) and the hub (7, 27, 27', 27") has a profile with a central opening with n receptacles (15, 15"), and wherein each receptacle (15, 15') is designed for interaction with a tooth (12), **characterized in that** the hub (7, 27, 27', 27") has n = 2m receptacles (15, 15") or n = 2m-1 receptacles (15, 15").

2. The transmission device as claimed in claim 1, **characterized in that** at least two hubs (7, 27, 27', 27") are provided, said hubs between each other having at least two different numbers n of receptacles (15, 15') and/or at least two different widths of receptacles (15, 15').

3. The transmission device as claimed in claim 2, **characterized in that** part of these at least two hubs (7, 27, 27', 27") has n = m receptacles (15, 15').

4. The transmission device as claimed in one of the preceding claims, **characterized in that** the hub (7, 27, 27', 27") is part of a hand wheel (17) or of a driver for driving or unlocking a fitting (21).

5. The transmission device as claimed in claim 4, **characterized in that** the fitting (21) is used to move seat components of the vehicle seat (1) relative to one another, in particular to adjust the inclination of a backrest.

6. The transmission device as claimed in claim 4 or 5, **characterized in that** a respective fitting (21) is provided on both sides of the vehicle seat, with the two fittings (21) being connected to each other by the shaft (10).

7. The transmission device as claimed in one of the preceding claims, **characterized in that** the shaft (10) has its profile over at least virtually the entire length.

8. The transmission device as claimed in one of the preceding claims, **characterized in that** the shaft (10) has a splined shaft profile with splines as teeth (12).

9. The transmission device as claimed in one of the preceding claims, **characterized in that** the shaft (10) has three teeth (12).

10. A vehicle seat, in particular motor vehicle seat, with at least one transmission device (5) as claimed in one of the preceding claims.

## Revendications

1. Dispositif de transmission pour un siège de véhicule, en particulier un siège de véhicule automobile, comprenant au moins un moyeu (7, 27, 27', 27") et un arbre (10), qui coopèrent par complémentarité de forme pour la transmission d'un couple, l'arbre (10) présentant un profil avec m dents (12), et le moyeu (7, 27, 27', 27"), un profil avec une ouverture centrale avec n logements (15, 15"), et chaque logement (15, 15') étant conçu pour coopérer avec une dent (12), **caractérisé par le fait que** le moyeu (7, 27, 27', 27") présente n=2m logements (15, 15") ou n=2m-1 logements (15, 15").

2. Dispositif de transmission selon la revendication 1, **caractérisé par le fait qu'**au moins deux moyeux (7, 27, 27', 27") sont prévus, lesquels présentent entre eux au moins deux nombres n différents de logements (15, 15') et/ou au moins deux largeurs différentes de logements (15, 15').

3. Dispositif de transmission selon la revendication 2, **caractérisé par le fait qu'**une partie de ces au moins deux moyeux (7, 27, 27', 27") présente n=m logements (15, 15').

4. Dispositif de transmission selon l'une des revendications précédentes, **caractérisé par le fait que** le moyeu (7, 27, 27', 27") est un composant d'un volant (17) ou d'un entraîneur pour l'entraînement ou le déverrouillage d'une ferrure (21).

5. Dispositif de transmission selon la revendication 4, **caractérisé par le fait que** des composants du siège du véhicule (1) sont déplacés les uns par rapport aux autres au moyen de la ferrure (21), en particulier l'inclinaison d'un dossier est réglé.

6. Dispositif de transmission selon l'une des revendications 4 ou 5, **caractérisé par le fait qu'**une ferrure (21) est prévue sur chacun des deux côtés du siège de véhicule, les deux ferrures (21) étant en liaison l'une avec l'autre par l'arbre (10).

7. Dispositif de transmission selon l'une des revendications précédentes, **caractérisé par le fait que** l'arbre (10) présente son profil sur au moins pratiquement l'ensemble de la longueur.

8. Dispositif de transmission selon l'une des revendications précédentes, **caractérisé par le fait que** l'arbre (10) présente un profil d'arbre cannelé avec des cannelures comme dents (12).

9. Dispositif de transmission selon l'une des revendications précédentes, **caractérisé par le fait que** l'arbre (10) présente trois dents (12).

10. Siège de véhicule, en particulier siège de véhicule automobile, comprenant au moins un dispositif de transmission (5) selon l'une des revendications précédentes.
